# EUROPEAN PATENT APPLICATION

(11) **EP 3 056 652 A1**
(43) Date of publication of application: **17.08.2016**
(21) Application number: 16152216.4
(22) Date of filing: 21.01.2016
(51) Int. Cl.: E06B 9/80, B60J 1/20, F16F 9/12

(54) **A VISCOUS DAMPING DEVICE FOR REDUCING THE ROTATION SPEED OF A WINDING ROLLER**

(30) Priority: 21.01.2015 IT MI20150055
(71) Applicant: ITI INDUSTRIALE S.r.L, 20016 Pero (MI) (IT)
(72) Inventor: SCHIRALDI, Sergio, 20016 Pero (MI) (IT); SCHIRALDI, Marco, 20016 Pero (MI) (IT); GATTI, Roberto, 20016 Pero (MI) (IT)
(74) Representative: Ciceri, Fabio

(57) **Abstract**

The present invention concerns a viscous damping device for reducing the rotation speed of the winding roller (3) of a screen once the screen has been previously unrolled from the roller (3) against an energy storing device, which causes the rotation of the roller (3) as the screen is being rewound. According to the invention, the device has a shaft (8), with a first end (9) having means (10) for axial coupling thereof to the screen winding roller (3), a rotor (15), coaxially placed on said shaft (8), a box-like element (16) enclosing said rotor (15), as well as means for connecting said shaft (8) to said rotor (15) as the roller (3) rotates and the screen is rewound and for disconnecting said shaft (8) from said rotor (15) as the screen is unwound from the roller (3). It is characterized in that the means for connecting and disconnecting said shaft (8) to and from said rotor (15) comprise a wheel (12) placed on the shaft (8) at its second end (11) axially opposite to the first end, said wheel (12) having a plurality of peripheral teeth (13) which define notches (14) therebetween, that said rotor (15) comprises a radial portion (15a) having at least one pair of seats (18, 19), each seat defining a first opening (20, 23) and a second opening (21, 24) at the outer peripheral surface (22) of said rotor (15), each of said first opening (20, 23) being axially opposed to its respective second opening (21, 24) and opening toward the teeth (13) and the notches (14) of said wheel (12), a magnet (27) being inserted in one of said first (20, 23) or said second (21, 24) openings, and freely sliding therein, said shaft (8) having an axial cavity (28) and a magnet (29) housed in said cavity (28).

## Description

### DESCRIPTION

### Field of the Invention

The present invention relates to a viscous damping device for reducing the rotation speed of a winding roller of a screen once such screen has been previously unrolled from the roller against an energy storing device, which causes the rotation of the roller as the screen is being rewound, as defined in the preamble of claim 1.

Particularly, the present invention concerns a device comprising a shaft, with a first end having means for axial coupling thereof to the screen winding roller, a rotor, coaxially placed on said shaft, a box-like element enclosing said rotor, as well as means for connecting said shaft to said rotor as the roller rotates and the screen is rewound and for disconnecting said shaft from said rotor as the screen is unwound from the roller.

Preferably, but without limitation, the present invention relates to a viscous damping that may be used on a vehicle, such as a car, a motor caravan, a camping trailer, a bus, a truck, a tractor, but also to be used in civil and naval construction, and the like.

### Background art

Roller blind-like screens are known to be mainly used for shading windows, although they also find application in other fields such as refrigerated displays in supermarkets, to cover frozen goods during closing hours and to assist in ensuring thermal insulation in combination with the conventional sliding cover that is used by customers during shopping hours.

The screen or panel is known to be wound around a roller associated with an energy storing device, usually a spring, which is loaded when the screen is pulled at one end to extend over the opening to be screened, and is locked thereupon using a conventional roller locking/unlocking mechanism, as is known in the art.

As the locking mechanism is released for the screen to leave its extended position and be wound up on the roller, the energy storing device, usually a spring, if not appropriately controlled, releases the energy stored therein by quickly rotating the winding roller, which might cause damage both to the screen, which may thus be broken, and to the winding roller supporting devices.

In view of obviating this drawback, the rollers for rolling screens or panels have been equipped in the art with damping devices for reducing the rotation speed of the roller as the screen is being rewound, in the form of either hydraulic clutch or magnetic clutch devices, as well as combined damping devices with hydraulic and magnetic clutches.

One exemplary embodiment of a damping device using magnetic clutches is disclosed in US 4,681,279.

These rotation speed reducers perform a desired speed-reducing action as the screen is being automatically rewound on the roller due to the stored energy, and oppose a resistance as the screen is being deployed, and if such resistance were not excluded it would add to the resistance exerted by the spring of the energy storing device, which is now being loaded, whereby a relatively high pulling force would be required to be exerted on the screen.

In view of obviating this drawback, the prior art suggests the use of mechanisms placed between the screen winding roller and the damping device, for excluding the opposing force of the latter, such that the operator would be only required to overcome the resistance of the spring of the energy storing device as the screen is being deployed.

Nevertheless, these mechanisms would increase the dimensions of screen winding devices, especially in the axial direction, such that they might not fit within the spaces available in the various applications of use.

This is particularly true in the case of refrigerated displays in supermarkets, which have screens adapted to cover their openings during closing hours, in association with the conventional lifting or sliding doors that are used during shopping hours.

Here, the provision of large devices is not compatible with the narrow space available between the doors and the underlying product-containing compartment.

### Object of the present invention

Therefore, the main object of the present invention is to provide a viscous damping device for reducing the rotation speed of the screen winding roller, that may be inserted during the screen rewinding step only and has a compact size, with small axial and radial dimensions.

This object is fulfilled by a device as defined in claim 1 below.

### Advantage of the present invention

The present invention provides a device that affords improved reliability and simpler installation and has a more compact size as compared with prior art counterparts.

### Brief description of the drawings

The invention will be now described in greater detail with reference to a preferred embodiment thereof, given by way of illustration and without limitation, and shown in the annexed drawings, in which:
- Figure 1 is a partial schematic exploded view of the structure of a lateral support of a winding roller of a rolling screen;
- Figure 2A is an exploded view of a part of Figure 1;
- Figure 2B is an exploded view of the main parts of a device of Figure 2A;
- Figure 3 shows an exploded view of the viscous damping device, equipped with the magnetic device allowing it to be only inserted as the screen is being rewound, according to the invention;
- Figure 4 shows a cross sectional view, transverse to the axis of rotation of the winding roller, of the magnetic device for inserting the damper in the position it assumes as the screen is unwound in a counterclockwise direction;
- Figure 5 shows a cross sectional view, transverse to the axis of rotation of the winding roller, of the magnetic device for inserting the damper in the position it assumes as the screen winding roller is rotated at a reduced speed.

### DETAILED DESCRIPTION

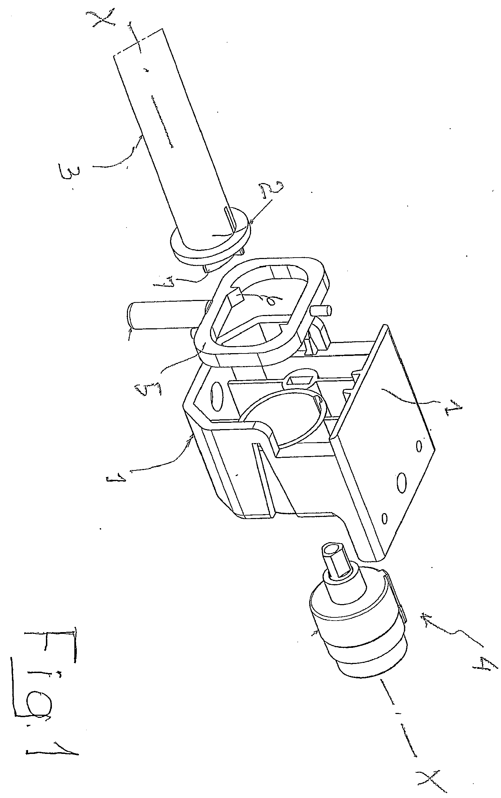

Referring to the aforementioned figures, and particularly Figure 1, numeral 1 designates a lateral support of the end 2 of a winding roller 3 for a conventional screen panel, not shown.

A second support, not shown, shall be intended to be placed at the other end of the winding roller 3.

The support 1 is used to mount the winding roller 3 level with the window to be screened or the opening to be covered, e.g. in refrigerated displays in a supermarket, which are not shown because they have a conventional construction and are not useful to understand the present invention.

A device, generally referenced 4, is placed on the opposite side of the support 1 and is axially connected to the roller 3, for reducing the rotation speed of the latter when, as it is released from the lock device, as schematically exemplified by the frame 5, the tooth 6 and the front teeth 7, it is rotated by the energy storing device, typically consisting of a spring, not shown due to its conventional construction, which had been loaded as the screen panel was deployed with the roller rotating in the opposite direction.

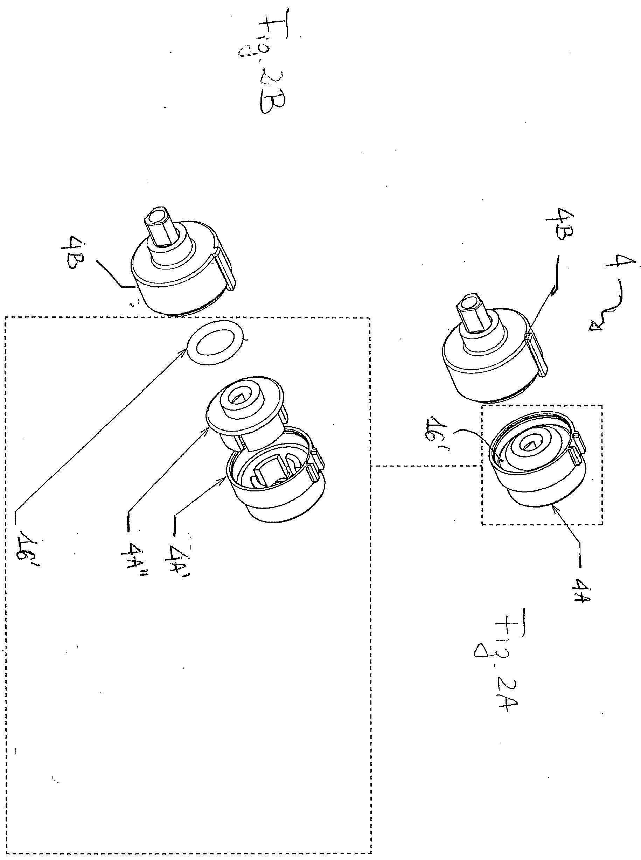

Referring to Figure 2A, the device 4 comprises a viscous part 4A and a magneto-mechanical part 4A.

In one aspect, the viscous part 4A is associated by a snap-fit joint with the magneto-mechanical part 4B, with a tight seal being created therebetween by an appropriate o-ring 16A.

Particularly, also referring to Figure 2B, the viscous part 4A comprises a body 4A' and a rotor 4A", which are mechanically connected together and sealed by the o-ring 16'.

A known viscous material, e.g. silicone oil or grease, is placed within the viscous part 4A, with the interposition of the o-ring 16' and the provision of an end plug 16A, for performing a damping action, as more clearly shown below.

In other words, the viscous part 4A contains a viscous material in which said rotor 4A" is dipped.

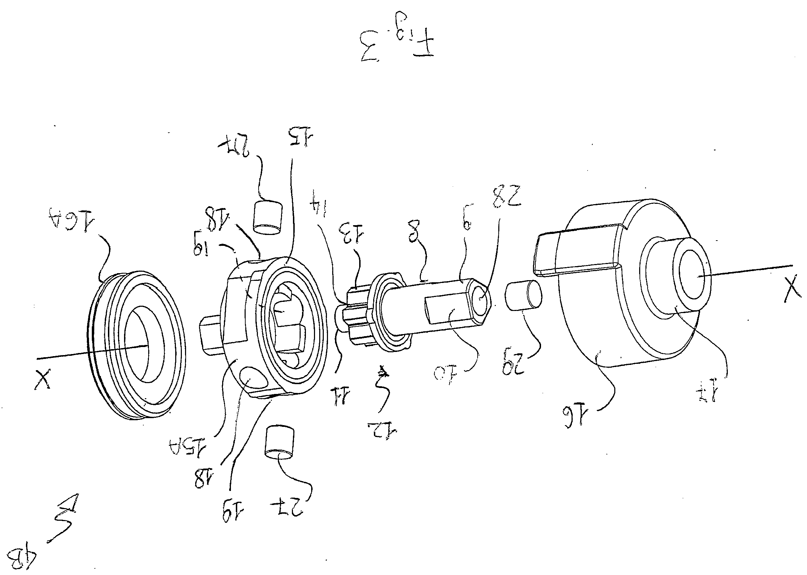

Referring now to Figure 3, it shall be noted that the magneto-mechanical portion 4B of the device 4 of the invention comprises a shaft 8 which has press-fit means 10 at its first end 9, for axial connection with the end 2 of the roller 3.

At the second end 11, the shaft 8 has a wheel 12 with a plurality of teeth 12 that form a corresponding plurality of recesses 14 therebetween 14.

The toothed wheel 12 is rotatably joined with the shaft 8.

A rotor, in the form of an annular element 15, is arranged coaxial with said shaft 8 and radially fits onto said wheel 12 with the plurality of teeth 13.

Particularly, according to the invention, said wheel 12 with the plurality of teeth 13 and recesses 14 is axially enclosed within the annular shape of the rotor.

A box-like element 16 encloses said annular element 15 and also has a tubular portion that covers an axial portion of the shaft 8 on the side of the end 9, while allowing access to the means 10 for axial connection with the winding roller 3.

The annular element 15 has at least one pair, preferably two pairs of hollow seats, generally referenced 18 and 19, in a radial portion 15a thereof.

Each seat of a pair is in mirror symmetry with the other, for a reason that will be more apparent hereinbelow.

Each pair has a first opening 20 and 21 and a second opening 23 and 24 respectively, which are formed at the outer peripheral surface 22.

The first opening 20 and 21, and the second opening 23 and 24 are axially opposed to each other.

The first and second openings of each seat have an abutment element member 25, 26 respectively, projecting toward the center of the annular element 15.

The seats 18 and 19, which preferably have a circular section, have at least one magnet therein, referenced 27, in alternation with each other according to the direction of rotation of the winding roller 3, such magnet being free of axially sliding in the seat toward the teeth 13 and recesses 14 of the wheel and vice versa, according to the direction of rotation of the roller 3 and the wheel 12 axially connected thereto.

The cross section of the magnet 27 conforms to that of the seats 18 and 19 and is preferably a circular section.

The shaft 8 has an axial cavity 28 which forms a seat for housing an additional magnet, referenced 29, which is located at the toothed wheel 12 and is designed to cooperate with the magnet 27 as the screen is being rewound, as better explained hereinbelow.

The seat 28 and the magnet 29 also preferably have a circular cross section.

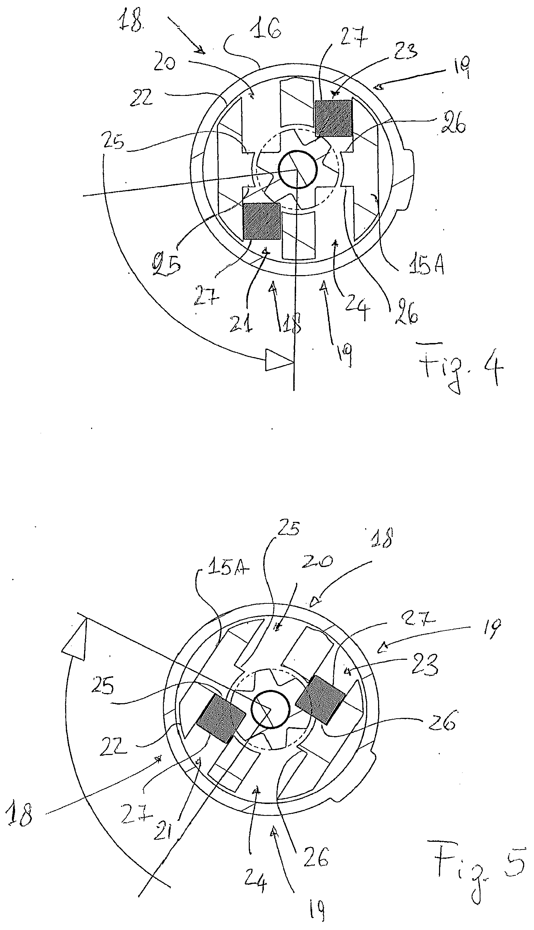

Particularly referring to Figures 4 and 5, the teeth 13 of the toothed wheel 12 have flat sides, and the sides of successive teeth form respective recesses 14 whose section, as taken perpendicular to the axis of rotation X-X of the shaft 8 and the wheel 12, forms substantially a right angle, with the vertex coinciding with the bottom of the recess.

As described above, particularly referring to Figures 4 and 5, which show two magnets 27, one in the opening 23 of the seat 19 and the other in the opening 21 of the seat 18, considering that the screen will be deployed by a counterclockwise rotation of the roller 3 (see Figure 4), the roller 3 and hence the toothed wheel 12 will rotate freely and the screen may be freely deployed only against the action of the elastic means of the energy storing device.

This is because the profile of the teeth 13 of the wheel 12 prevents the magnets 27 from falling into the recesses 14 because, as the wheel rotates 12, the teeth 13 push it toward the openings 21, 23 of the respective seats 18, 19.

During such rotation, the conventional energy storing device (spring) is loaded without any rotation of the annular rotor 15 and with no motion being thus transmitted to the viscous part 4A.

As the screen is rewound, when the locking mechanism 5, 6, 7 is released in a conventional manner, the roller 3 is rotated, here clockwise, by the action of the energy storing device.

During this rotation, the magneto-mechanical device 4B of the invention engages the rotor 15 which rotates in the box-like element 16 and transfers motion to the viscous portion 4A through the mechanical fit specially designed for this purpose.

Thus, as soon as an angular clockwise movement of the wheel 12 causes a recess 14 to be available under the magnets 27 the latter are attracted by the magnet 29 housed in the cavity 28 of the shaft 8 and fit into that recess to the abutment 25, thereby causing the rotor 15 to be rotatably joined with the wheel 12 and the shaft 8 that supports it.

In order to reverse the motion of the roller, the magnets 27 shall be simply placed in the seats 20 and 24 of the pairs 18 and 19 respectively.

The above disclosure clearly shows that the damping device has a very compact size, as the members that are designed to insert the damping section of the device as the screen is being rewound fall within the axial footprint of the damping part, i.e. the rotor 15.

Particularly, the provision of the magnetic elements 17, 29 in the magneto-mechanical portion 4B results in a more compact viscous portion 4A. The size of the viscous portion 4A may be also reduced according to the various damping requirements and the density of the silicone oil in use.

It shall be appreciated that, as the volume occupied by the viscous portion is decreased, then a more compact damping device may be obtained, which may be used even in narrow-space applications.

Those skilled in the art will obviously appreciate that a number of changes and variants may be made to the above device, still within the scope of the invention, as defined in the following claims.

## Claims

1. A viscous damping device for reducing the rotation speed of the winding roller (3) of a screen once the screen has been previously unrolled from the roller (3) against an energy storing device, which causes the rotation of the roller (3) as the screen is being rewound, said device comprising:
- a viscous part (4A) and a magneto-mechanical part (4B), said viscous part (4A) being associated by a snap-fit joint with said magneto-mechanical part (4B),
- said viscous part (4A) comprising a body (4A') and a first rotor (4A"), which are mechanically connected together and sealed by an o-ring (16'),
- said magneto-mechanical part (4B) comprising a shaft (8), with a first end (9) having means (10) for axial coupling thereof to the screen winding roller (3), a second rotor (15), coaxially placed on said shaft (8), a box-like element (16) enclosing said second rotor (15), means for connecting said shaft (8) to said second rotor (15) as the roller (3) rotates and the screen is rewound and for disconnecting said shaft (8) from said second rotor (15) as the screen is unwound from the roller (3),
**characterized in that** said means for connecting and disconnecting said shaft (8) to and from said second rotor (15) comprise a wheel (12) placed on the shaft (8) at its second end (11) axially opposite to the first end, said wheel (12) having a plurality of peripheral teeth (13) which define recesses (14) therebetween, that said second rotor (15) comprises a radial portion (15a) having at least one pair of seats (18, 19), each seat defining a first opening (20, 23) and a second opening (21, 24) at the outer peripheral surface (22) of said second rotor (15), each of said first opening (20, 23) being axially opposed to its respective second opening (21, 24) and opening toward the teeth (13) and the recesses (14) of said wheel (12), a first magnet (27) being inserted in one of said first (20, 23) or said second (21,24) openings, and freely sliding therein, said shaft (8) having an axial cavity (28) at a second end thereof, and a second magnet (29) housed in said cavity (28),
- whereby as said screen (2) is being wound, the attraction between said first (27) and second (29) magnets pushes said first magnet (27) into said recess (14) of said wheel (12), such that said first magnet (27) will cause said second rotor (15) to be rotatably joined with said wheel (12) and the rotation of said first rotor (4A"), which is dipped in a viscous material, will cause said viscous damping effect for reducing the rotation speed of the roller (3).

2. A device as claimed in claim 1, **characterized in that** the sides of each of the teeth of the wheel (12) having peripheral teeth (13), are flat and form, with the side of the adjoining tooth, an intermediate recess whose section, perpendicular to the axis of rotation of the wheel (12) is substantially a right angle whose vertex coincides with the bottom of the recess (14).

3. A device as claimed in claim 1 or 2, wherein said radial portion (15a) of said second rotor (15) comprises two pairs of hollow seats (18, 19), which are in parallel side-by-side relationship, said two pairs of hollow seats (18, 19) having a magnet (27) therein, in alternation with each other according to the direction of rotation of the screen winding roller (3).

4. A device as claimed in any of claims 1 to 3, wherein said rotor (15) has an annular shape and said wheel (12) with the plurality of teeth (13) and recesses (14) is axially enclosed within the axial extent of the annular shape of the second rotor (15).

5. A device as claimed in any of claims 1 to 4, wherein said cross section of the axial cavity formed in said shaft, transverse to the axis of rotation (X-X) of the roller (3) has a circular shape.

6. A device as claimed in claim 1, wherein said cross section of each of at least one pair of seats (18, 19) formed in said radial portion (15a) of the annular element, transverse to the longitudinal axis, has a circular shape.

7. A device as claimed in any of claims 1 to 6, wherein the cross sectional shape of said first and second magnets (27, 29) matches the shape of the seat (18, 19) in which they are housed.
